# EUROPEAN PATENT SPECIFICATION

(11) **EP 2 240 702 B1**
(45) Date of publication and mention of the grant of the patent: **02.11.2011**
(21) Application number: 08871090.0
(22) Date of filing: 18.11.2008
(51) Int. Cl.: F16C 35/04, F16C 35/06, F16C 35/077, B21D 22/20, D06F 39/00

(54) **WASHING MACHINE**
WASCHMASCHINE
MACHINE À LAVER

(30) Priority: 16.01.2008 IT MC20080007
(43) Date of publication of application: 20.10.2010
(73) Proprietor: Meccanica Generale S.R.L., 60038 San Paolo Di Jesi (AN) (IT)
(72) Inventor: MANCINI, Stefano, I-60035 Jesi (AN) (IT); BACELLI, Stefano, I-60035 Jesi (AN) (IT)
(74) Representative: Baldi, Claudio
(86) International application number: PCT/EP2008/065728
(87) International publication number: WO 2009/089949

(56) References cited:
- EP-A- 1 211 431
- EP-A- 1 528 136
- GB-A- 1 275 237

## Description

The present patent application for industrial invention relates to a washing machine comprising a bearing support made of moulded sheet metal.

The said bearing support is preferably designed to be mounted in washing machines and washer/dryer combos to replace similar parts that are used currently.

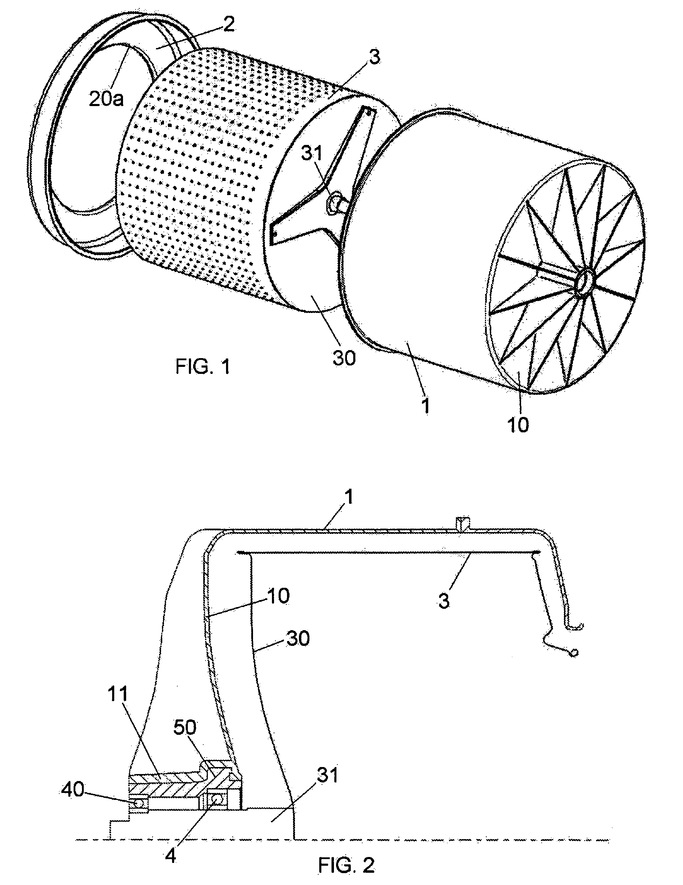

The peculiarities and advantages of the present invention will become evident following to a short description of the prior art with specific reference to figures 1 and 2.

As it is known, current washing machines and washer/dryer combos are provided with a plastic tank of composite structure, being formed of two components (1, 2) designed to be coupled firmly with known fixing means.

The first component consists in a large hollow cylindrical body (1) closed at one end by a bottom wall (10) with a central hole connected in the back with a cylindrical nozzle (11) designed to exactly house a metal bearing support (50) with basically cylindrical shape.

The second component consists in a flange (2) with a large central opening (20a) designed to be mounted at the front open end of the hollow cylindrical body (1).

A cylindrical drum (3) is normally mounted inside the tank and designed to be loaded with laundry through the said opening (20a) of the front flange (2) of the tank.

The drum (3) is closed on the back by a bottom wall (30) with an axially protruding shaft (31) in central position designed to be driven into rotation by the electrical motor of the household appliance that is usually mounted outside the tank.

In particular, the shaft (31) is designed to be inserted and supported, with the interposition of two ball bearings (4, 40) with different diameters, in the bearing support (50) engaged into the nozzle (11) obtained on the bottom wall (10) of the hollow cylindrical body (1) of the tank.

To that end, a similar basically cylindrical bearing support (50) is internally provided with two circular housings in which the two ball bearings (4, 40) are exactly engaged.

A similar bearing support (50) needs to be anchored firmly to the plastic structure of the nozzle (11) that houses it.

To that end, current bearing supports have an external geometrical shape that tends to favour the penetration of the plastic material used to mould the bottom wall of the tank.

The said stable anchoring is necessary because the laundry loaded in the drum of a washing machine tends to have a random arrangement due to the rotational motion of the drum.

In fact, an unbalanced rotational mass is originated, in association with a very high centrifugal force that inevitably tends to transmit very high stress to the bearing support.

Traditional bearing supports are obtained by means of cast iron or aluminium pressure die casting.

However, it must be noted that both technologies are rather demanding and overelaborate, also because the supports obtained with them must be subjected to turning and grinding operations in the circular housings designed to receive bearings.

Another inconvenience of traditional technologies is represented by the large waste of material (aluminium or cast iron) during the said processes.

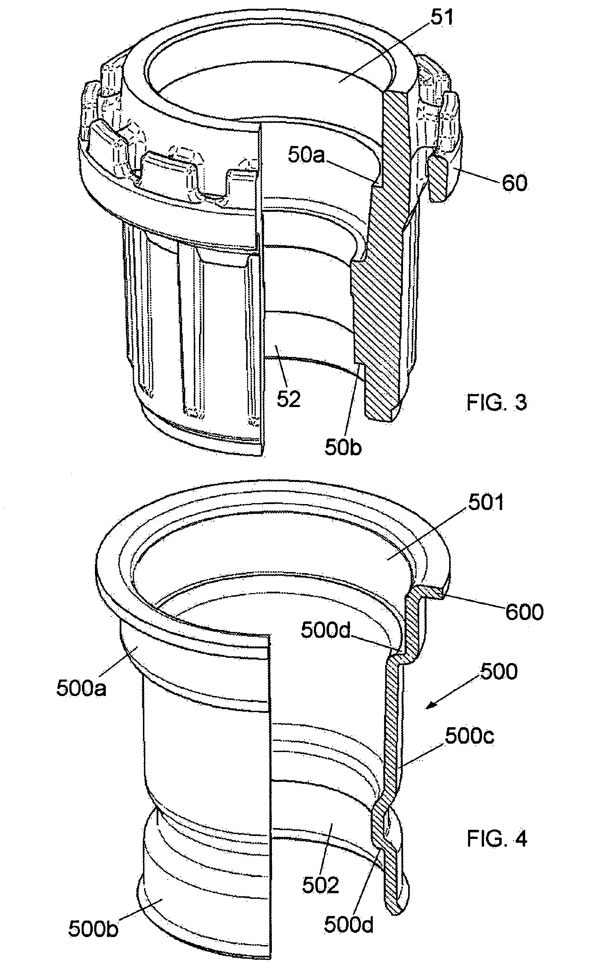

This inconvenience will be understood better with reference to figure 3, which is a sectional view of a traditional bearing support obtained from aluminium or cast iron. As shown in the said figure, a similar support must have a longitudinal section of variable thickness according to its typical operative requirements.

In fact, the said support must be internally provided with at least two perimeter shoulders (50a, 50b) designed to stop the bearings engaged in the end housings and externally provided with at least a perimeter flange (60) designed to favour anchoring on the plastic material used for the nozzle (11) of the hollow body (1) where the support (50) is to be engaged firmly. According to the traditional die-casting process, the said internal shoulders (50a, 50b) and the external flange (60) can only be obtained by means of a higher deposit of the material inside the die used to mould the support (50). However, a similar requirement inevitably generates considerable thickness increase in the aforementioned points (50a, 50b, 60) of the support (50), exceeding the requirements of structural resistance in the bearing housings compared to the stress discharged on bearings by the shaft that supports the drum, especially during spinning.

The need to selectively increase the thickness of a support (50) made of aluminium or cast iron involves considerable costs for the manufacturer, due to the large quantity of material needed, with a considerable weight increase of the entire object.

EP 1 211 431 discloses a metal bearing liner for an axial flow fan motor. The metal bearing liner is formed by press work over a progressive sheet material in sequence.

GB 1 275 237 discloses a bearing unit for washing machine. The bearing housing is in the form of a deep-drawn sheet metal part.

The specific purpose of the present invention is to devise a washing machine wherein the manufacturing technology of bearing supports is characterised by a simpler, quicker procedure compared to traditional technologies.

Another purpose of the present invention is to obtain a washing machine having bearing supports with constant thickness, regardless of the presence of the necessary internal and external ridges.

This is extremely important in order to minimise the use of the material and, consequently, reduce the production costs and the weight of the product.

According to the present invention there is a washing machine according to claim 1.

According to the present invention, a bearing support of washing machine is moulded by means of a deep-drawing process with multiple operations, starting from a flat sheet metal and obtaining housings for ball bearings with excellent dimensional accuracy and surface finish.

In particular, the said housings for ball bearings are obtained by means of cold pressure forming with special calibrated punches.

In view of the above, a first important advantage of the present invention is that the complete bearing support is obtained without requiring the additional machining operations (in particular: turning and grinding) that are inevitable in case of aluminium or cast iron supports.

A second important advantage of this pressure forming technique is that the support is given a constant (or basically constant) thickness along its entire height, thus considerably reducing the amount of material used and the weight of the finished product.

For more clarity the description of the invention continues with reference to the enclosed drawing, which is intended for purposes of illustration only and not in a limiting sense, whereby:
- figures 4 to 8 are axonometric views of alternative embodiments of the bearing support of washing machine of the invention;
- figures 9A, 9B, 9C and 9D are diagrammatic views of the different phases of the deep-drawing process used to obtained the support of the invention;

With reference to the enclosed figures, the bearing support (500) of washing **machine** obtained according to the aforementioned innovative technique has a basically cylindrical structure, externally provided with perimeter means for anchoring to the plastic material in which the support (500) is to be drawn and internally provided with perimeter stop means for bearings (4, 40).

The support (500) is provided with a first end (500a) with higher section and a second end (500b) with lower section, with the interposition of a central connection section (500c).

Two calibrated circular housings (501, 502) are obtained at the ends (500a, 500b) of the support (500), designed to exactly house corresponding ball bearings (4, 40) with different diameters.

As shown in figures 4 to 8, the support of the invention (500) has a basically constant thickness both in its straight sections (i.e. parallel to its longitudinal axis) and in the curved sections with inward or outward direction.

In particular, the thickness value is determined by the resistance requirements against mechanical stress of the housing (501) designed to house the bearing (4) facing the drum, that is to say the housing that is actually the most stressed section of the entire structure of the support of the invention (500).

Moreover, the embodiment of the present invention shown in fig. 4 is provided at the first end (500a) with a perimeter flange (600) designed to favour the stable anchoring of the support (500) in the plastic material used to mould the bottom wall (10) of the tank.

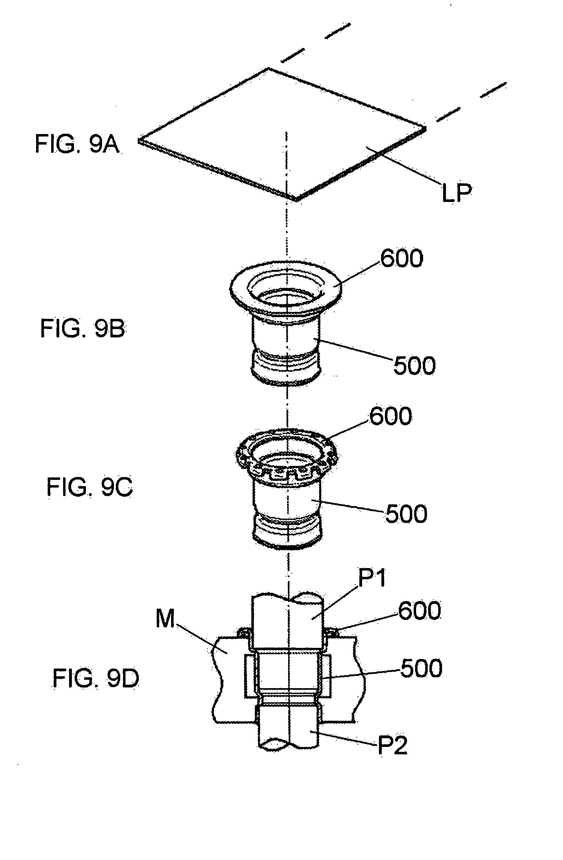

As mentioned above, a similar cylindrical support (500) is obtained from a flat sheet metal (as shown in fig. 9A) formed by deep-drawing according to a precise sequence of operations.

The first operation (I) of the sequence consists in forming the flat sheet metal (LP) to obtain the cylindrical structure of the support (500) complete with perimeter flange (600), as shown in fig. 9B.

On one hand, the presence of a similar flange (600) contributes to give higher rigidity to the housing (501) of the bearing, while on the other hand ensures the firm anchoring of the support (500) in the plastic material of the bottom wall (10) of the tank, especially when the drum is spinning.

The support (500) is moulded by means of successive deformations of the flat sheet metal during suitable deep-drawing phases.

During the said sequence of operations, the circular housings (501, 502) designed to receive the ball bearings (4, 40) are outlined basically at the ends (500a, 500b) of the support (500).

The next operation consists in "machining" the perimeter flange (600), meaning perimeter fringing (material removal), perimeter drilling and backward folding of the external border; reference is made to figure 9C.

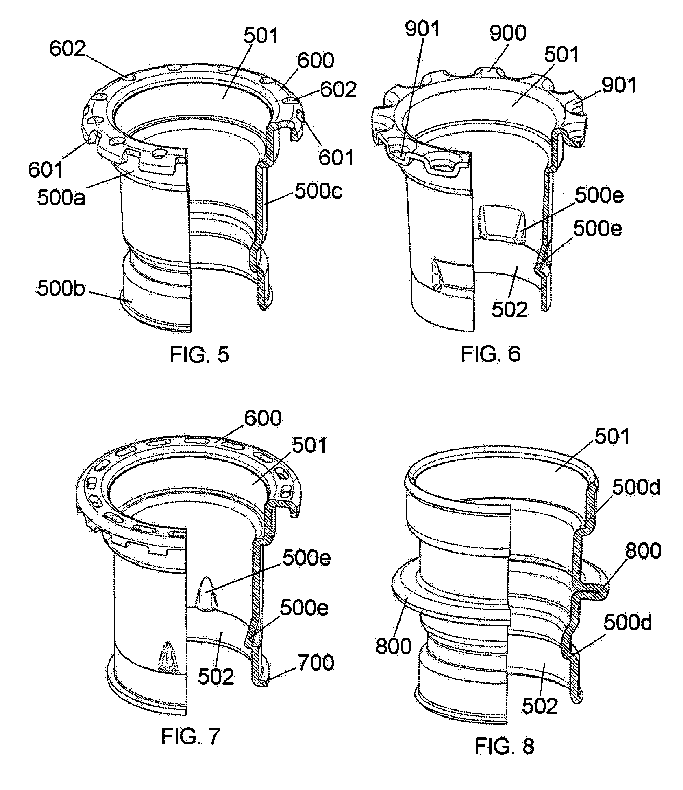

As illustrated in the embodiment of the support shown in fig. 5, the flange (600) is folded backwards and provided with an external crenellated border (601) and a perimeter series of through holes (602). Considering that the aforementioned forming operations generate a large amount of heat, the next operation consists in cooling the moulded support (500).

The final operation of the said process consists in cold pressure forming with calibrated punches (P1 P2) of the two housings (501, 502) in order to receive bearings (4, 40) with the established tolerance values; reference is made to figure 9D.

During the energetic interference of the two punches (P1, P2), the support (500) is firmly held by a sort of vice (M).

Regardless of the description of the embodiment shown in fig. 4, it is understood that the new technology of the invention is also suitable to be used to manufacture bearing supports with different detail solutions.

For instance, the technology of the invention can be used to obtain a bearing support provided with a perimeter stiffening border (700) folded outwards at the second end (500b), in addition to the flange (600) at the first end (500a); reference is made to figure 7.

On the other hand, a perimeter flange (800) could also be realised in the intermediate section (500c) of the support (500), especially with reference to application on washing machines with low rotational speed and lower centrifugal force; reference is made to figure 8.

Evidently, the one or more perimeter flanges may also have different profiles from the ones shown in the aforementioned figures.

In particular, the flange (900) provided in the embodiment of fig. 6 has a basically flat profile (that is to say without external backwards folded border) and is not provided with through holes, which are replaced by non-through niches (901) that originate a basically "indented" structure to favour the stable anchoring with the plastic material of the bottom wall (10) of the tank (1). Finally, alternative solutions may be also provided with reference to the structure given to the perimeter stop for bearings (4, 40) inside the corresponding housings (501, 502).

A similar stop can consist in a shoulder (500d) with continuous development along the entire circumference of the housing (502), as shown in figs. 4, 5 and 8.

Nevertheless, another embodiment of the said stop with non-continuous development is possible, being formed of a regularly spaced perimeter series of individual ridges (500e); reference is made to figs. 6 and 7.

## Claims

1. Washing machine comprising:
- a plastic tank formed by a large hollow cylindrical body (1) and a flange (2), the hollow cylindrical body being closed at one end by a bottom wall (10) with a central hole connected in the back with a cylindrical nozzle (11),
- a cylindrical drum (3) mounted inside the tank and closed on the back by a bottom wall (30) with an axially protruding shaft (31) in central position designed to be driven into rotation by an electrical motor,
- a bearing support (500) engaged into the nozzle (11) of the tank and rotatably supporting said shaft (31) of the drum, by means of two bearings (4, 40),
said bearing support (500) being completely moulded by means of deep-drawing from a flat sheet metal (LP) to obtain a basically cylindrical structure with constant thickness,
said bearing support (500) comprising:
- a first end portion (500a) and a second end portion (500b) with respective housings (501, 502) for the two bearings (4, 40) and formation of perimeter stops (500d, 500e) for said two bearings (4, 40) inside the housings (501, 502), and
- a perimeter flange (600) obtained on the border of the first end portion (500a) for engagement of the support (500) into the nozzle (11) of the tank,
**characterised in that**
- said two bearings (4, 40) are ball bearings with different diameters, the first ball bearing (4) having diameter greater than the second ball bearing (40),
- said first end portion (500a) of the support (500) has higher section with respect to the second end portion (500b) so that the first ball bearing (4) can be housed into the housing (501) of the first end portion (500a) and the second ball bearing (40) can be housed into the housing (502) of the second end portion (500b),
- said support (500) is drawn into the plastic material of the nozzle (11) of the tank, and
said perimeter flange (600) of the support is folded backwards and is provided with an external crenellated border (601) obtained by material removal in order to obtain a firm anchoring to the plastic structure of the nozzle (11).

## Patentansprüche

1. Waschmaschine umfassend:
- eine Kunststoffwanne, gebildet aus einem großen, zylindrisch geformten Hohlkörper(1) und einem Flansch (2), wobei der zylindrisch geformte Körper an einem Ende durch eine Bodenwand (10) mit einem zentralen Loch begrenzt wird, das auf der Rückseite an ein zylindrisches Mundstück (11) angeschlossen ist,
- eine zylindrisch geformte Trommel (3), die in der Wanne montiert ist und auf der Rückseite durch eine Bodenwand (30) mit einer Welle (31) begrenzt wird, die in zentraler Position axial übersteht und dazu bestimmt ist, von einem Elektromotor in Rotation versetzt zu werden,
- eine Halterung für Lagergehäuse (500), die in das Mundstück (11) der Wanne eingreift und die Welle (31) der Trommel mithilfe von zwei Lagern (4, 40) auf drehbare Weise trägt,
wobei die Halterung für Lagergehäuse (500) vollständig mittels Tiefziehen aus einem flachen Blech (LP) hergestellt wird, um eine im Wesentlichen zylindrisch geformte Struktur mit gleichmäßiger Dicke zu erhalten,
wobei die Halterung für Lagergehäuse (500) Folgendes umfasst:
- ein erstes Ende (500a) und ein zweites Ende (500b) mit entsprechenden Sitzen (501, 502) zur Aufnahme der beiden Lager (4, 40) und Ausbildung umlaufender Anschläge (500d, 500e) für die beiden Lager (4, 40) in den Sitzen (501, 502) und
- einen umlaufenden Flansch (600), der auf dem Rand des ersten Endes (500a) für das Eingreifen der Halterung (500) in das Mundstück (11) der Wanne herausgearbeitet ist,
**dadurch gekennzeichnet, dass**
- die beiden Lager (4, 40) Kugellager mit unterschiedlichen Durchmessern sind, wobei das erste Kugellager (4) einen größeren Durchmesser als das zweite Kugellager (40) besitzt,
- das erste Ende (500a) der Halterung (500) einen größeren Querschnitt als das zweite Ende (500b) aufweist, damit das erste Kugellager (4) in dem Sitz (501) des ersten Endes (500a) und das zweite Kugellager (40) in dem Sitz (502) des zweiten Endes (500b) aufgenommen werden kann,
- die Halterung (500) in das Kunststoffmaterial des Mundstücks (11) der Wanne versenkt ist und
der umlaufende Flansch (600) der Halterung nach hinten gebogen und mit einem äußeren gezackten Rand (601) versehen ist, der durch Entfernen von Material geschaffen wird, um eine feste Verankerung in der Kunststoffstruktur des Mundstücks (11) zu erzielen.

## Revendications

1. Machine à laver comprenant :
- une cuve en plastique formée par un grand corps cylindrique cave (1) et une bride (2), le corps cylindrique étant délimité à une extrémité moyennant une paroi de fond (10) qui présente un trou central relié en face arrière avec un embout cylindrique (11),
- un panier cylindrique (3) monté dans la cuve, délimité en face arrière moyennant une paroi de fond (30) avec un arbre (31) débordant axialement en position centrale, destiné à être activé en rotation par un moteur électrique,
- un support porte-paliers (500) engagé dans l'embout (11) de la cuve et qui supporte de manière rotative le dit arbre (31) du panier moyennant deux paliers (4, 40),
le dit support porte-paliers (500) étant complètement imprimé moyennant emboutissage à partir d'une tôle plane (LP) pour obtenir une structure substantiellement cylindrique ayant une épaisseur constante,
le dit support porte-paliers (500) comprenant :
- une première extrémité (500a) et une seconde extrémité (500b) ayant des correspondants sièges de logement (501, 502) des dits deux paliers (4, 40), et formation de butées de périmètre (500d, 500e) pour les deux paliers (4, 40) dans les sièges (501, 502), et
- une bride de périmètre (600) réalisée sur le bord de la première extrémité (500a) suite à l'engagement du support (500) dans l'embout (11) de la cuve, **caractérisée en ce que**
- les dits deux paliers (4, 40) sont des paliers à billes ayant des diamètres différents, le premier palier à billes (4) ayant un diamètre majeur du second palier à billes (40),
- la dite première extrémité (500a) du support (500) présente une section majeure par rapport à la seconde extrémité (500b), de manière à ce que le premier palier à billes (4) puisse se loger dans le siège (501) de la première extrémité (500a) et le second palier à billes (40) puisse se loger dans le siège (502) de la seconde extrémité (500b),
- le dit support (500) est noyé dans le matériel plastique de l'embout (11) de la cuve et
la dite bride de périmètre (600) du support est repliée vers l'arrière et elle est dotée d'un bord externe dentelé (601) réalisé moyennant l'élimination de matériel, dans le but d'obtenir un ancrage solide à la structure en plastique de l'embout (11).
